# EUROPÄISCHE PATENTSCHRIFT

(11) **EP 0 884 292 B1**
(45) Veröffentlichungstag und Bekanntmachung des Hinweises auf die Patenterteilung: **02.06.2004**
(21) Anmeldenummer: 98105793.8
(22) Anmeldetag: 30.03.1998
(51) Int. Cl.: C04B 28/26, C04B 14/06, C04B 22/06

(54) **Bindemittelzusammensetzung**
Binder composition
Composition de liant

(30) Priorität: 04.06.1997 DE 19723436
(43) Veröffentlichungstag der Anmeldung: 16.12.1998
(73) Patentinhaber: Eurovente SA, 25045 Besançon (FR)
(72) Erfinder: Rizza, Michel, 94170 Le Perreux sur Marne (FR); Balau, Johann, 36208 Wildeck-Obersuhl (DE)
(74) Vertreter: Patentanwälte Leinweber & Zimmermann

(56) Entgegenhaltungen:
- EP-A- 0 641 748
- DE-A- 2 165 354
- DE-A- 19 544 018
- US-A- 5 228 808
- CHEMICAL ABSTRACTS, vol. 90, no. 10, 5. März 1979 Columbus, Ohio, US; abstract no. 75756t, TABATA, TOSHIRO: "Inorganic lightweight aggregates" Seite 250; XP000064308 & JP 53 126024 A (11.04.77)
- CHEMICAL ABSTRACTS, vol. 89, no. 26, 25. Dezember 1978 Columbus, Ohio, US; abstract no. 219905v, TABATA, TOSHIRO: "Foamed silicates useful as building materials" Seite 282; XP000063946 & JP 78 104626 A12. September 1978

## Beschreibung

Die Erfindung betrifft eine Bindemittelzusammensetzung zur Herstellung von Farben, Schlämmen, Mörteln und Putzen.

Als Bindemittel für die genannten Einsatzzwecke kann beispielsweise Zement benutzt werden. Zur Herstellung von Zement werden üblicherweise Rohstoffe, wie etwa Kalkstein, Ton, Kalkmergel, Tonmergel usw., unter Freigabe von Kohlendioxid in Drehrohröfen mit Rost- oder Zyklonvorwärmung bei Temperaturen von etwa 1500 °C gebrannt und zum Erhalt gewünschter Eigenschaften mit CaSO₄, weiteren Zusatzstoffen und/oder Zuschlägen vermahlen. Dieses Verfahren ist nicht nur äußerst energieaufwendig, sondern führt im allgemeinen auch zu einer unzureichenden Sulfatwiderstandsfähigkeit des damit erhaltenen Produkts, weil dieses im allgemeinen Al₂O₃ enthält, was die Gefahr von Ettringitbildung mit sich bringt.

In der DE 2 165 354 A werden nicht-brennbare Formgegenstände offenbart, die aus einem integral gebundenen Basismaterial und dekorativem Oberflächenmaterial gebildet werden. Das Oberflächenmaterial enthält eine SiO₂-haltige Komponente sowie Kalk. Weiterhin kann das Oberflächenmaterial auch Wasserglas in unterschiedlichen Mengen enthalten. Wird nun diese Stoffzusammensetzung als Bindemittel zur Herstellung von Farben, Mörteln und Putzen verwendet, treten Probleme auf. Es hat sich nämlich gezeigt, daß die somit erlangten Farben, Schlämme, Mörtel und Putze oft hochsensibel auf Wasser reagieren. Diese dehnen sich dann nämlich bei Kontakt mit Wasser in unkontrollierter Weise aus. Die etwa auf einer Fassade eines Gebäudes aufgebrachten Farbanstriche oder Putze werden dadurch oft zur Unbrauchbarkeit geschädigt.

Angesichts der vorstehend erläuterten Probleme im Stand der Technik, liegt der Erfindung die Aufgabe zugrunde, Bindemittel zur Herstellung von Farben, Schlämmen, Mörteln und Putzen bereitzustellen, bei denen die mittels des Bindemittels hergestellten Farben, Schlämme, Mörtel und Putze nicht hochsensibel mittels Volumenveränderung auf Wasser reagieren.

Zur Lösung dieser Aufgabe wird eine Bindemittelzusammensetzung vorgeschlagen, die im wesentlichen die folgenden Bestandteile enthält:
3 bis 80 Gew% Wasserglas,
1 bis 70 Gew% Kalkhydrat und/oder Brandkalk sowie
0,1 bis 50 Gew% einer SiO₂-haltigen Komponente,
und die dadurch gekennzeichnet ist, daß das Gesamtsystem Al₂O₃-frei rezeptiert wird.

Die Ausgangsstoffe dieser Bindemittelzusammensetzung können ohne übermäßigen Energieaufwand hergestellt werden, so daß die Herstellungskosten im Vergleich zu Zement deutlich gesenkt werden können.

Das Wasserglas, die SiO₂-haltige Komponente und/oder der Brandkalk der erfindungsgemäßen Zusammensetzung bilden Silikate, die die gewünschten Bindemitteleigenschaften aufweisen.

Die Erfindung geht auf die Erkenntnis zurück, daß sich bei Kontakt mit Sulfaten durch die Anwesenheit von Al₂O₃ in der als Bindemittel verwendeten Stoffzusammensetzung nach dem Stand der Technik Ettringit bildet. Der Kontakt mit Sulfaten kommt gewöhnlich dadurch zustande, daß das Bindemittel zum Erhalt gewünschter Eigenschaften oft mit CaSO₄ vermahlen wird, bevor es zur Herstellung von Farben, Schlämmen, Mörteln und Putzen eingesetzt wird. Das somit gebildete Ettringit reagiert hochsensibel auf Wasser, wodurch es sich sehr stark in seinem Volumen ausdehnt. Aufbauend auf dieser Einsicht, geht die Erfindung auf die Erkenntnis zurück, daß bei einem Weglassen von Al₂O₃ in dem Bindemittel die Ettringitbildung vermieden werden kann und gleichzeitig eine funktionsfähige Bindemittelzusammensetzung zur Herstellung von Farben, Schlämmen, Mörtel und Putzen erlangt werden kann.

Darüber hinaus hat sich überraschenderweise herausgestellt, daß die erfindungsgemäße Bindemittelzusammensetzung ein niedriges Schwind- und Quellmaß aufweist, d.h. daß sie bei ihrer Verarbeitung nur eine äußerst geringe Volumenänderung zeigt. Schließlich ist durch den Einsatz von SiO₂ und Wasserglas der SiO₂-Modul der erfindungsgemäßen Bindemittelzusammensetzung beliebig einstellbar, so daß unterschiedliche Säurewiderstände erzielt werden können.

Die SiO₂-haltige Komponente der erfindungsgemäßen Bindemittelzusammensetzung kann Aerosil, Mikrosilika, Puzzolane und/oder Quarz enthalten. Der erfindungsgemäßen Bindemittelzusammensetzung können zur Einstellung gewünschter Erstarrungseigenschaften auch noch erhärtungsregulierende Verbindungen, wie Phosphate, Phosphonate, Chloride und organische Zusätze, wie etwa Zitronensäure als organischen Verzögerer, zugegeben werden.

Durch entsprechende Auswahl der einzelnen Anteile der erfindungsgemäßen Bindemittelzusammensetzung können an die jeweiligen Einsatzbedingungen angepaßte Abbindemechanismen eingestellt werden.

Zum Aufbau und zur Herstellung von Farben, Schlämmen, Mörteln und Putzen können die erfindungsgemäßen Bindemittel vorgemischt und nachträglich mit Körnungen, Leichtzuschlägen, Stellmitteln, Pigmenten usw., zu Farben, Schlämmen, Mörteln und Putzen gemischt werden.

Alternativ können die Einzelkomponenten der erfindungsgemäßen Bindemittelzusammensetzung auch direkt mit Stellmitteln, Körnungen, Leichtzuschlägen, Pigmenten usw. gemischt werden.

## Patentansprüche

1. Bindemittelzusammensetzung zur Herstellung von Farben, Schlämmen, Mörteln und Putzen, mit den folgenden Bestandteilen:
3 bis 80 Gew% Wasserglas,
1 bis 70 Gew% Kalkhydrat und/oder Brandkalk sowie
0,1 bis 50 Gew% einer SiO₂-haltigen Komponente,
**dadurch gekennzeichnet, daß** das Gesamtsystem Al₂O₃-frei rezeptiert wird.

2. Bindemittelzusammensetzung nach Anspruch 1, **dadurch gekennzeichnet, daß** die SiO₂-haltige Komponente ein Aerosil, Mikrosilikat, Puzzolane und/oder Quarz aufweist.

3. Bindemittelzusammensetzung nach Anspruch 1 oder 2, **gekennzeichnet durch** zusätzliche, erhärtungsregulierende Verbindungen, wie Phosphate, Phosphonate, Chloride und organische Zusätze.

## Claims

1. Binder composition for producing paints, slurries, mortars, plasters and renders, comprising the following constituents:
from 3 to 80% by weight of water glass,
from 1 to 70% by weight of calcium hydroxide and/or calcium oxide and
from 0.1 to 50% by weight of an SiO₂-containing component, **characterized in that** the overall system is formulated so as to be free of Al₂O₃.

2. Binder composition according to Claim 1, **characterized in that** the SiO₂-containing component contains an aerosil, microsilicate, pozzolana and/or quartz.

3. Binder composition according to Claim 1 or 2, **characterized by** additional compounds which regulate curing, for example phosphates, phosphonates, chlorides and organic additives.

## Revendications

1. Composition de liant pour la fabrication de peintures, de boues, de mortiers et d'enduits, avec les composants suivants:
3 à 80% en poids de verre soluble
1 à 70% en poids d'hydrate de calcium et/ou de chaux vive ainsi que
0,1 à 50% en poids d'un composant contenant du SiO₂,
**caractérisée en ce que** le système total est formulé sans Al₂O₃.

2. Composition de liant selon la revendication 1, **caractérisée en ce que** le composant contenant du SiO₂, présente un aérosil, microsilicate, puzzolane et/ou quartz.

3. Composition de liant selon la revendication 1 ou 2, **caractérisée par** des composés additionnels régulant le durcissement, comme des phosphates, des phosphonates, des chlorures et des produits d'addition organiques.
